# EUROPEAN PATENT SPECIFICATION

(11) **EP 2 752 730 B1**
(45) Date of publication and mention of the grant of the patent: **03.04.2019**
(21) Application number: 13150475.5
(22) Date of filing: 08.01.2013
(51) Int. Cl.: G06F 3/01, B60K 35/00, G06F 3/0481, B60K 37/00

(54) **Vehicle display arrangement and vehicle comprising a vehicle display arrangement**
Fahrzeuganzeigeanordnung und Fahrzeug mit einer Fahrzeuganzeigeanordnung
Agencement d'affichage pour véhicule et véhicule comprenant un tel agencement d'affichage

(43) Date of publication of application: 09.07.2014
(73) Proprietor: Volvo Car Corporation, 40 531 Göteborg (SE)
(72) Inventor: Edgren, Claes, 46154 Trollhättan (SE)
(74) Representative: Valea AB

(56) References cited:
- EP-A1- 2 372 512
- DE-A1-102007 039 442
- DE-U1-202008 015 741
- GB-A- 2 470 754
- US-A1- 2009 313 584
- US-A1- 2010 050 129

## Description

### TECHNICAL FIELD

Embodiments herein relate to a vehicle display arrangement. Embodiments herein further relate to a vehicle comprising a vehicle display arrangement.

### BACKGROUND

Many of today's motor vehicles are equipped with a number of analogue instruments and one or more digital displays, for displaying information to a vehicle operator. The information on the display may concern a vehicle condition, such as vehicle speed, engine speed, motor temperature, distance to refuel etc. The display may also present information concerning driving related conditions, such as outer temperature, skidding risk, information regarding navigation or communication information, such as phone calls or messages of various kinds. Based on the information revealed, the vehicle operator can take decisions, such as when to refuel or where to take a turn.

Certain information is presented constantly to the vehicle operator and other information is available only after interaction with display control means. If the driver seeks information not constantly presented, he/she may have to push a button or interact with a touch screen in order to access the temporary required information. It is a challenge to arrange a user interface where the driver is presented a balanced load of information on a display. Further, since a great load of information often is available, it is also a challenge for the vehicle operator to access desired and temporarily required information, without losing focus on the task of driving.

In order to allow the vehicle operator to interact with the vehicle, WO2011155878A1 suggests a driver head tracking system, with a sensor for monitoring the driver's head position or gaze direction. The system is arranged to modify the displayed information depending on the driver's head position or gaze direction, and if the driver moves his head forward, a virtual instrument cluster is moved downwards, allowing new information to be added at the bottom of a cluster screen.

The driver head tracking system according to WO2011155878A1 functions according to a keyhole principle; when the driver looks at the screen from one direction he can see one information area, when he looks at the screen from another direction, he can see another information area. This can be advantageous in certain situations, but improvements in the field of vehicle user interface and display arrangements are still desirable.

DE 20 2008 015741 U1 relates to a display system for a motor vehicle. The display system comprises a display device, a head and/or eye position detection device, a control device and an image data memory. The control device is configured such that screen objects are provided with a shade/side element on their outer borders if it is detected that the viewer is looking at the display from a position to the left/right of an ordinary viewing angle.

In US 2009/313584 A1 an electronic device for providing a display that changes based on the user's perspective is provided. The electronic device may include a sensing mechanism operative to detect the user's position relative a display of the electronic device. For example, the electronic device may include a camera operative to detect the position of the user's head. Using the detected position, the electronic device may be operative to transform displayed objects such that the displayed perspective reflects the detected position of the user. The electronic device may use any suitable approach for modifying a displayed object, including for example a parallax transform or a perspective transform. In some embodiments, the electronic device may overlay the environment detected by the sensing mechanism to provide a more realistic experience for the user. EP 2 372 512 A1 relates to a vehicle user interface unit for a vehicle electronic device. The unit comprises: a 3D display unit adapted to display an image such that the image is perceived by a user as a virtual 3D image at least partially located in front of the display when the user observes the display; a display control unit adapted to control the generation of the image by the 3D display unit such that said virtual 3D image comprises a 3D-object having at least two regions located in different spatial planes, each region comprising plural interaction elements; an input unit adapted to detect the location of a user-controlled object.

In US 2010/050129 A1 a method for providing a graphical user interface for an electronic device having a display and a plurality of associated applications is disclosed, the method comprising the steps of: generating the appearance of a virtual three dimensional object having a plurality of panels, wherein the panels are positioned on the surface of the object; associating each of the panels to one of the applications; and displaying two or more of the panels of the object on the display, wherein the associated applications of the panels are displayed.

GB 2 470 754 A relates to an entertainment device. The device comprises a display, a video camera positioned in a known physical relation to the display and operable to capture images of a user of the entertainment device, and a processing means operable to analyze one or more images captured by the video camera and estimate a position of the user relative to a reference position. The entertainment device is operable to generate for the display an image having a selected viewpoint that deviates from a reference viewpoint in correspondence with a deviation of the estimated position of the user from the reference position. The video camera is employed to track a user's head to estimate a viewer position. Pre-recorded image pairs representing different predetermined viewpoints of the same scene are used for generating monoscopic images of stereoscopic content for display on monoscopic display, wherein the reproduced monoscopic image view point is based on the detected viewpoint position of the user.

DE 10 2007 039442 A1 discloses a method for displaying information in a motor vehicle. Objects are represented graphically with the aid of a display mounted in a motor vehicle. A user-interface device generates graphics data which control the display such that the graphical objects are shown disposed on a virtual, perspectively displayed ring. In response to an input, the graphics data are altered such that the graphical objects on the virtual ring rotate like a carousel.

### SUMMARY

Embodiments herein aim to provide a vehicle display arrangement for a vehicle operator without the problems or drawbacks described above.

According to a first aspect, the object is achieved by a vehicle display arrangement according to the present invention as defined in appended claim 1.

According to the principles of the proposed vehicle display arrangement, the vehicle operator can achieve a change of display information by moving his head. Therefore, selected graphical display objects which comprise information will be displayed to the vehicle operator in an easy and intuitive manner.

Thanks to this, a vehicle operator is able to keep his/her hands at a steering wheel in an ordinary driving position and will not have to move one hand from the steering wheel to a button, knob or the like in order to access information not constantly displayed. The vehicle operator can simply change his head position in a first direction in order to let the display temporarily present this information.

Another advantage is that a display configuration generally displayed to the vehicle operator can be configured to only present important or frequently required information. When additional graphical display objects are required for displaying information temporarily needed, the vehicle operator can easily access the information through a change of head position in the first direction.

In addition to the above mentioned advantages, initiation of at least one of a dimension change of graphical display objects and a change of the relation between the graphical display objects in a predefined manner, by changing vehicle head operator position, will facilitate the user-vehicle interaction since the vehicle operator cognitively will connect the change of head position with the change on the display. A change of the dimensions of graphical display objects and/or the change of the relation between the graphical display objects in a predefined manner by a change of head position is an easy and intuitive way of controlling the information on the display. According to some embodiments, the dimension change of graphical display objects and/or the relation between the graphical display objects is arranged such that the graphical display objects will be perceived to be adjusted in a direction substantially corresponding to the first direction, which further will enhance an understanding of how head movement will affect the information presented on the display.

This results in a vehicle display arrangement for a vehicle operator that the vehicle operator can interact with without the problems or drawbacks described above, and therefore the above mentioned object is achieved.

According to a second aspect, the object is achieved by a vehicle display arrangement wherein the control unit is arranged to automatically initiate at least one of a dimension change of graphical display objects or a change of the relation between the graphical display objects following a monitored predefined change of the vehicle operator head position in a second direction such that previously displayed as partly hidden graphical display objects are arranged to be displayed as visible in a second predefined manner.

Since the control unit is arranged to automatically initiate at least one of a dimension change of graphical display objects or a change of the relation between the graphical display objects following a monitored predefined change of the vehicle operator head position in a second direction, such that previously displayed as partly hidden graphical display objects are arranged to be displayed as visible in a second predefined manner, selected graphical display objects will be displayed in an easy and intuitive manner. The vehicle operator can change his head position in the second direction in order to let the display present information temporarily. Thanks to this, a display configuration generally displayed to the vehicle operator can be configured to only present important or frequently needed information. When additional graphical display objects are needed, for displaying temporarily needed information, the vehicle operator can easily access the information through a change of head position in the second direction.

According to a third aspect, the object is achieved by a vehicle display arrangement wherein the control unit is arranged to automatically initiate at least one of a dimension change of graphical display objects or a change of the relation between the graphical display objects following a monitored predefined change of the vehicle operator head position in a first or second direction such that previously displayed as partly hidden graphical display objects, arranged as a side on a virtual cube, are arranged to be displayed as visible.

Since the control unit is arranged to automatically initiate at least one of a dimension change of graphical display objects or a change of the relation between the graphical display objects following a monitored predefined change of the vehicle operator head position in a first or second direction, such that previously displayed as partly hidden graphical display objects, arranged as a side on a virtual cube, are arranged to be displayed as visible, graphical display objects can be displayed in an easy and intuitive manner. The vehicle operator can change his head position in the first or second direction in order to be able to see graphical display objects arranged as a side on a virtual cube.

The presentation of the graphical display objects arranged as a side on a virtual cube can further enhance an understanding of how head movement will affect the information presented on the display, since the movement of the head corresponds to the action a person generally would have taken in order to retrieve information arranged on a side that not is initially facing the person on a physical cube.

Since the vehicle display arrangement is arranged to let a user use a movement pattern he/she would have used when studying a physical object for gaining information presented on a corresponding digital object in form of graphical display objects on a display, he/she can easy cognitively connect a two dimensional display presentation with his/hers perception adapted for a three-dimensional space. He/she can then, thanks to changes on the display as a result of his head movement, perceive the display to present a three dimensional cube where he/she easily can access selected information by looking at the virtual cube from a head position other than his ordinary head position.

According to a fourth aspect, the object is achieved by a vehicle display arrangement wherein the control unit is arranged to automatically initiate at least one of a dimension change of graphical display objects or a change of the relation between the graphical display objects in a first predefined manner following a monitored predefined change of the vehicle operator head position in a first or second direction, thereby being arranged to automatically display conditions in an apparatus or system in a manner that allows perception of the presentation on the display to be three dimensional.

Since the control unit is arranged to automatically initiate at least one of a dimension change of graphical display objects or a change of the relation between the graphical display objects in a first predefined manner following a monitored predefined change of the vehicle operator head position in a first or second direction, thereby being arranged to automatically display conditions in an apparatus or system in a manner that allows perception of the presentation on the display to be three dimensional, a vehicle operator will cognitively connect a two dimensional display presentation with his/her perception adapted for a three-dimensional space. He/she will then, thanks to changes on the display as a result of his/her head movement, perceive the display to present a three dimensional presentation where he/she easily can access selected information by looking at the virtual presentation from a head position other than his/he ordinary head position.

Automatic display of conditions in an apparatus or system in a three dimensional manner will facilitate for a vehicle operator to operate the vehicle in an easy and safe manner.

According to a fifth aspect, the object is achieved by a vehicle display arrangement wherein the control unit is arranged to automatically initiate at least one of a dimension change of graphical display objects or a change of the relation between the graphical display objects following a monitored predefined change of the vehicle operator head position in a first direction, thereby being arranged to modify the display from a first display configuration into a second temporary display configuration.
Since the control unit is arranged to automatically initiate at least one of a dimension change of graphical display objects or a change of the relation between the graphical display objects following a monitored predefined change of the vehicle operator head position in a first direction, thereby being arranged to modify the display from a first display configuration into a second temporary display configuration, a vehicle operator can use his head position in order to access a second temporary display configuration.
This will be very useful when he/she desires to access information displayed on second temporary display configuration, for example information that he/she only requires temporarily or from time to time. It could be information regarding a vehicle condition or other information of interest for the vehicle operator, such as navigation instructions, conditions in a vehicle environment, or messages of any kind.

According to a sixth aspect, the object is achieved by a vehicle display arrangement wherein the control unit is arranged to automatically initiate at least one of a dimension change of graphical display objects or a change of the relation between the graphical display objects following a monitored predefined change of the vehicle operator head position in a direction opposite the first direction, thereby being arranged to modify the display from a second temporary display configuration into the first configuration.
Since the control unit is arranged to automatically initiate at least one of a dimension change of graphical display objects or a change of the relation between the graphical display objects following a monitored predefined change of the vehicle operator head position in a direction opposite the first direction, thereby being arranged to modify the display from a second temporary display configuration into the first configuration, a vehicle operator can use his head position to change a second temporary display configuration into a first display configuration.

This will be very useful when the second temporary display configuration is present and the vehicle operator desires to access information displayed on the first display configuration.

According to a seventh aspect, the object is achieved by a vehicle that comprises a vehicle display arrangement.

Since a vehicle that comprises a vehicle display arrangement will facilitate for a vehicle operator to interact with the vehicle, or various systems or arrangements related to the vehicle, the above mentioned object is achieved.

Further features of, and advantages with, the embodiments herein will become apparent when studying the appended claims and the following detailed description. Those skilled in the art will realize that different features of the embodiments herein may be combined to create embodiments other than those described in the following, without departing from the scope of the appended claims.

### BRIEF DESCRIPTION OF THE DRAWINGS

The various aspects of embodiments herein, including its particular features and advantages, will be readily understood from the following detailed description and the accompanying drawings, in which:
Fig. 1 illustrates a schematic view of the vehicle display arrangement according to some embodiments
Fig. 2 illustrates a vehicle display arrangement according to some embodiments.
Fig. 3 illustrates a vehicle display arrangement according to some examples useful for the understanding the invention.
Fig. 4 illustrates a vehicle display arrangement according to some examples useful for the understanding the invention.
Fig. 5 illustrates a vehicle display arrangement according to some embodiments.
Fig. 6 illustrates a vehicle display arrangement according to some examples useful for the understanding the invention.

### DETAILED DESCRIPTION

Embodiments herein will now be described more fully with reference to the accompanying drawings, in which example embodiments are shown. However, this application should not be construed as limited to the embodiments set forth herein. Disclosed features of example embodiments can be combined as readily understood by one of ordinary skill in the art to which this application belongs. Like numbers refer to like elements throughout.

Well-known functions or constructions will not necessarily be described in detail for brevity and/or clarity.

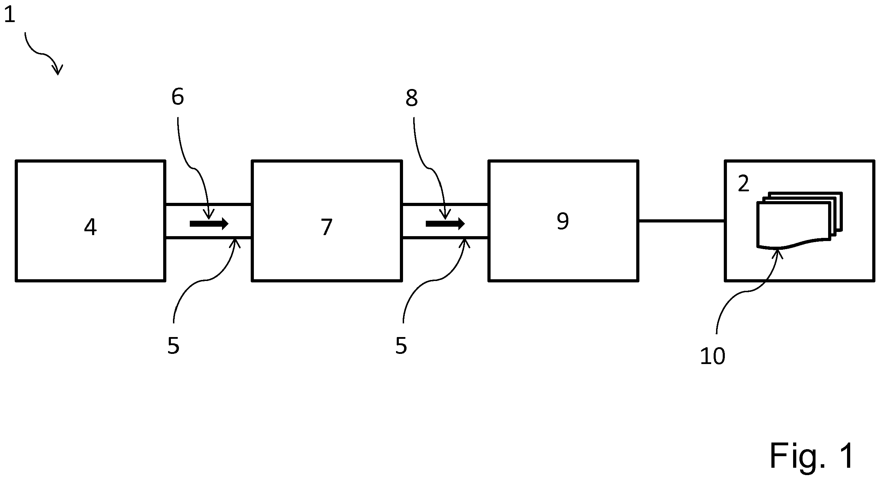

Fig. 1 illustrates a vehicle display arrangement **1** according to some embodiments. The vehicle display arrangement 1 comprises one or more sensors **4** for monitoring a vehicle operator head position and communication means **5** arranged to communicate input signals **6** indicative of the vehicle operator head position from the sensor or sensors 4 to a processing unit **7.** The processing unit 7 is arranged to interpret the input signals 6 and, based on the interpretation of the input signals 6, communicate output signals **8** to a control unit **9** via the communication means 5. The control unit 9 is arranged to automatically initiate at least one of a dimension change of graphical display objects **10** on the display **2** or a change of the relation between the graphical display objects 10 following a monitored predefined change of the vehicle operator head position (not shown).

In alternative embodiments the one or more sensors 4 are part of a sensor arrangement, such as a vehicle operator tracking device capable of detecting a vision characteristic of a face and/or a head of the vehicle operator, such as an infrared camera or a digital camera, arranged to monitor for example head position, gaze direction or face direction of the vehicle operator.

According to some embodiments the one or more sensors 4 is arranged on or in the vicinity of a windshield, ceiling, dashboard or pillar, and according to some embodiments sensors used in other vehicle systems are used also for tracking the vehicle operator head position. The input signals 6 are electrical signals, arranged to be emitted when the one or more sensors 4 detect a change of vehicle operator head position. The input signal 6 is sent via Bluetooth, Wi-Fi, CAN bus or any other wired or wireless communication means, or via a combination of these.

The processing unit 7 is arranged to receive and interpret the signals 6 from the one or more sensors 4. The processing unit 7 can be an electronic computer of any kind, programmed to execute arithmetic and logical operations, and according to some embodiments the processing unit 7 includes a CPU, memory units, and integrated circuits. According so some embodiments the processing unit 7 is a separate processing unit, and in other embodiments the processing unit is integrated in any other vehicle processing unit. According to some embodiments the processing unit 7 is a part of a vehicle infotainment unit, such as an infotainment head unit, IHU. According so some embodiments the output signals 8 are electrical signals, sent via Bluetooth, Wi-Fi, CAN bus or any other wired or wireless communication means, or via a combination of these.

The control unit 9 is arranged to automatically initiate at least one of a dimension change of graphical display objects 10 on the display 2 or a change of the relation between the graphical display objects 10. According so some embodiments the control unit 9 is a separate control unit, and in other embodiments the control unit 9 is integrated in any other vehicle control unit. According so some embodiments the control unit 9 is part of a vehicle infotainment unit, such as an infotainment head unit, IHU.

The initiation of at least one of a dimension change of graphical display objects 10 on the display 2 or a change of the relation between the graphical display objects 10 is based on the output signal 8, sent from the processing unit 7 via the communication means 5. The control unit 9 is arranged as a separate unit or a unit integrated with the processing unit 7. If the control unit 9 and the processing unit 7 are integrated, the output signal 8 is sent between different unit parts within the processing unit.

The display 2 can be any kind of display suitable for presenting information to a vehicle operator or passenger. In some embodiments the display 2 is arranged on a dashboard, a steering wheel, centerstack or any other position suitable for presenting information to a vehicle operator. The display 2 is for example a touch screen, a LCD display, a LED display, a head-up-display or similar. In some embodiments the graphical display objects 10 are presented at one or more displays 2 simultaneously and graphical display objects 10 with different kinds of information can be presented on different displays 2.

The one or more sensors 4, the communication means 5, the processing unit 7, the control unit 9 and the display 2 are comprised in a vehicle display arrangement 1.

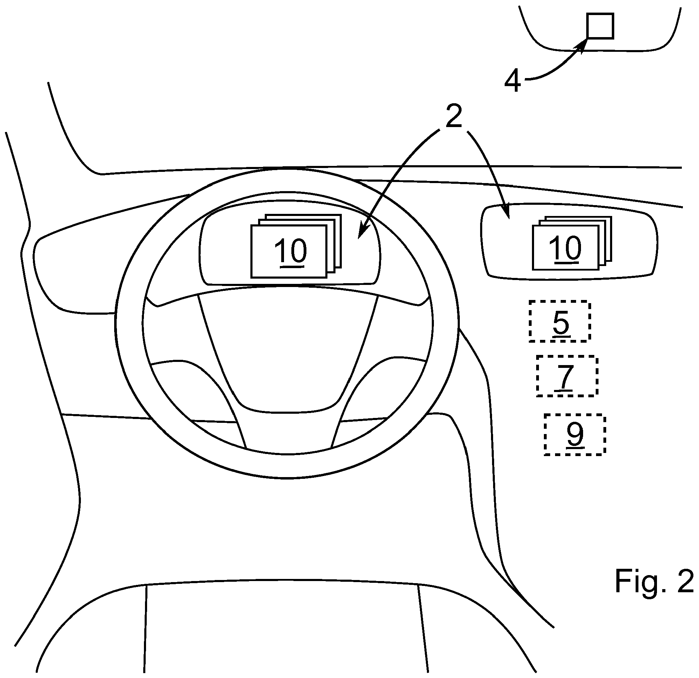

Fig. 2 illustrates a vehicle display arrangement 1 according to some embodiments. The vehicle display arrangement 1 comprises a display 2 for displaying information to a vehicle operator 3 (not shown) and one or more sensors 4 for monitoring a vehicle operator head position. Communication means 5 are arranged to communicate input signals 6 indicative of the vehicle operator head position to a processing unit 7, and the processing unit 7 is arranged to interpret the input signals 6. Based on the interpretation of the input signals 6, the processing unit 7 communicates output signals 8 to a control unit 9 via the communication means 5. The control unit 9 is arranged to modify the information presented on the vehicle display 2.

In fig. 2, the display 2 is arranged in the vicinity of the dashboard in front of a seated vehicle operator (not shown) and/or in a position in a central part of the dashboard. In some embodiments the display 2 comprises two or more display surfaces arranged together or in different positions in the vehicle.

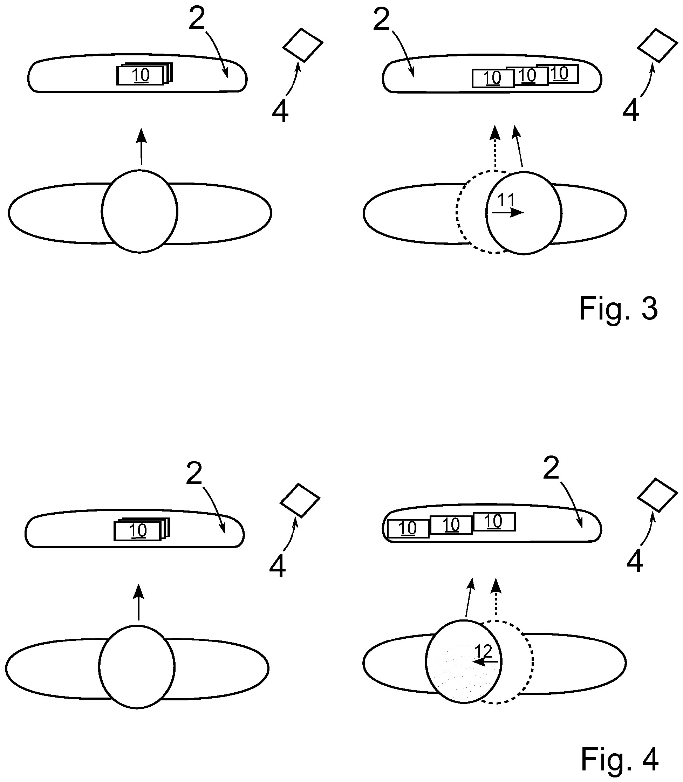

Fig. 3 illustrates a vehicle display arrangement 1 according to some examples useful for the understanding the invention. In the left part of fig. 3, a vehicle operator is positioned in an ordinary driving position. When seated in a driver's seat, facing forward in the longitudinal direction of the vehicle, he/she will see the display 2 in front of him/her. Graphical display objects 10 are illustrated on the display 2. The graphical display objects 10 comprise different kinds of information. The information is for example related to a vehicle or environment condition such as vehicle speed, engine speed, active gear etc. The vehicle display arrangement 1 is adapted to present any useful information that the vehicle operator needs in a driving situation.

If the vehicle operator would like to gain temporary information regarding a condition not presented, he can do this by changing his head position in a first direction 11, as illustrated in the right part of fig. 3. The one or more sensors 4 are sensing the change of head position or gaze direction and the graphical display objects 10 are changed such that previously displayed as partly hidden graphical display objects 10 are displayed as visible. The vehicle operator can then access information not previously displayed.

With partly hidden graphical display objects 10 means that at least a part or portion of the graphical display objects 10 is hidden to the vehicle operator and at least a part of the graphical display objects 10 is displayed to the vehicle operator. According to some embodiments, only a small part, such as one or a few per cent of the graphical display objects 10 is hidden. According to some embodiments, only a small part, such as one or a few per cent of the graphical display objects 10 is displayed.

According to the example illustrated in fig. 3, the graphical display objects 10 are partly overlapping each other in both the left and right part of the figure.

In one example, the graphical display objects 10, according to the left part of fig. 3, comprises an instruction, and in order to see the next instruction, the vehicle operator can change his head position in a first direction 11, as illustrated in the right part of fig. 3. Thus, only the most important or relevant information will be displayed to the vehicle operator at any time, and if he/she would like to gain additional information he/she can easily do so by looking at the display 2 from another direction.

The change of viewing angle is illustrated in the right part of fig. 3, where the dashed lines illustrates the ordinary vehicle operator position before the change of head position, and the filled lines illustrates the vehicle operator position after the change of head position. The viewing angle is referred to as the angle between a vehicle operator gaze direction and a plane substantially in parallel with a display surface.

The change of viewing angle required for a change of the graphical display objects 10 can be adjustable according to the preferences of a vehicle operator. According to some embodiments, just a change of viewing angle of one or a few degrees will be sufficient, in other embodiments a larger change of viewing angle could be required, such as a few degrees up to 45 or more degrees.

According to fig. 3, the graphical display objects 10 are arranged as a stack, where the different graphical display objects 10 are arranged on top of each other or partly on top of each other when the vehicle operator is looking at the graphical display objects 10 from an ordinary driving position, and the different graphical display objects 10 can be arranged beside each other or partly overlapping when the vehicle operator head position moves in a first direction 11. The first direction is illustrated with arrow 11 in fig. 3.

In one example, the vehicle display arrangement 1 is arranged such that the graphical display objects 10, according to the left part of fig. 3, comprises information regarding the traffic situation in the vicinity of the vehicle, and in order to see information regarding the traffic situation ahead of the vehicle the vehicle operator will have to change his head position in a first direction 11, as illustrated in the right part of fig. 3. The information is stored in a vehicle related system or is sent to the vehicle from a traffic information centre or similar.

In one example, the vehicle display arrangement 1 is arranged such that the graphical display objects 10, according to the left part of fig. 3, comprise information regarding fuel consumption or current vehicle speed, and in order to see information regarding distance to empty or average vehicle speed the vehicle operator will have to change his head position in a first direction 11, as illustrated in the right part of fig. 3.

In one example, the vehicle display arrangement 1 is arranged such that the graphical display objects 10, according to the left part of fig. 3, comprise information regarding traffic signs in the vicinity of the vehicle, and in order to see information regarding the traffic signs ahead of the vehicle the vehicle operator will have to change his head position in a first direction 11, as illustrated in the right part of fig. 3. This is useful, for example, if the vehicle operator needs to decide when to overtake a vehicle in front of him.

In one example, the vehicle display arrangement 1 is arranged such that the graphical display objects 10, according to the left part of fig. 3, comprises a message, such as an email or text message, and in order to see other messages the vehicle operator will have to change his head position in a first direction 11, as illustrated in the right part of fig. 3. In order to create a display area big enough to host information, a small change 11 of operator head position can be arranged to move the graphical display objects 10 in the stack such that the vehicle operator will see more of the graphical display objects 10 than he would have done if observing a physical stack from a different direction. The movement of the graphical display objects 10 in the stack is thus exaggerated in comparison with the change of head movement. This is referred to as hyperrealism.

Fig. 4 illustrates a vehicle display arrangement 1 according to some examples useful for the understanding the invention and resembles the vehicle display arrangement 1 according to fig. 3. A control unit 9 (not shown) is arranged to automatically initiate at least one of a dimension change of graphical display objects 10 or a change of the relation between the graphical display objects 10 following a monitored predefined change of the vehicle operator head position in a second direction **12,** such that previously displayed as partly hidden graphical display objects 10 are arranged to be displayed as visible in a second predefined manner. The second direction is illustrated with arrow 12 in the right part of fig. 4. According to the example illustrated in fig. 4, the graphical display objects 10 are partly overlapping in the left part of the figure and displayed as totally visible in the right part of the figure.

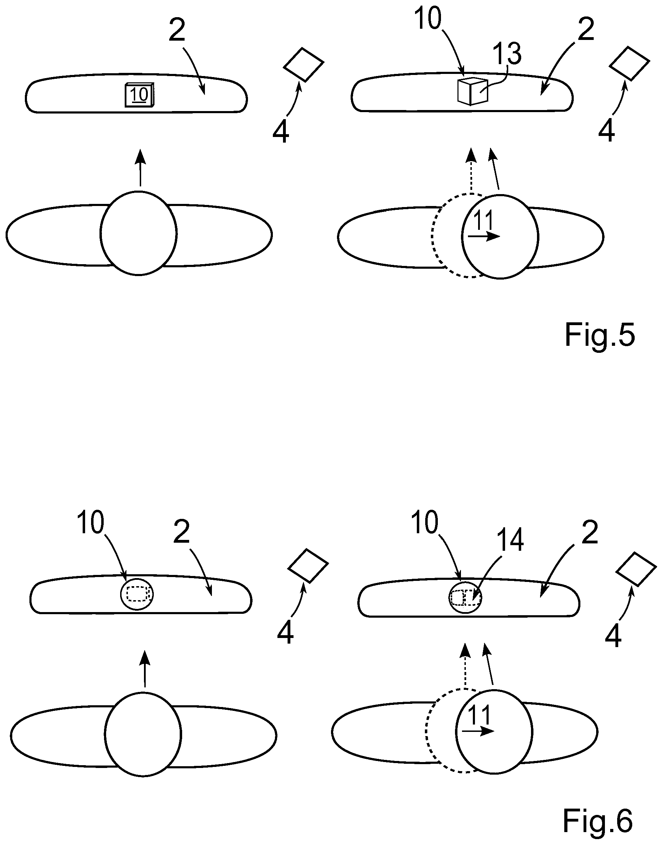

Fig. 5 illustrates a vehicle display arrangement 1 according to some embodiments. The graphical display objects 10 are arranged as a virtual cube with different sides. One side is initially facing the vehicle operator, as seen in the left part of fig. 5. If the vehicle operator likes to gain temporary information regarding information not initially presented he will have to change his head position in a first direction 11, as illustrated in the right part of fig. 5. The one or more sensors 4 are sensing the change of head and the graphical display objects 10 are changed such that one or more, previously displayed as partly hidden, sidewalls **13** of the cube are arranged to be displayed as visible.
From the vehicle operator point of view, the cube has turned such that he can see information presented on the sidewall 13. Alternatively, the vehicle operator facing side of the cube, as seen in the left part of fig. 5 is still facing the vehicle operator, and the sidewall 13 has turned into a displayed position.
As indicated in the left part of fig. 5, the sidewall will be hinted or partly displayed to the vehicle operator in an ordinary driving position in order to enhance the understanding that the graphical display objects 10 are to be observed as a physical three dimensioned object.
In some embodiments, a change of vehicle driver head position upwards, downwards, forwards and/or rearwards will initiate turning of another cube wall, such as a top wall or a bottom wall.
In order to create a display area big enough to host information, a small change of operator head position will turn the virtual cube such that the vehicle operator can see more of sidewall 13 than he would have done if observing a physical cube. The turning is thus exaggerated, in comparison with the change of head movement. This is referred to as hyperrealism.
If the vehicle operator changes his head position in a second direction, another cube wall will change to be displayed as visible to the vehicle operator. Different information can be displayed on different sides of the cube, and the vehicle operator will be able to access the information by moving his head.

Fig. 6 illustrates a vehicle display arrangement 1 according to some further examples that are not covered by the claims. The graphical display objects 10 are arranged as a virtual sphere, with different sides or different side portions. One side faces the vehicle operator, as seen in the left part of fig. 6. If the vehicle operator would like to gain temporary information regarding information not normally presented he will have to change his head position in a first direction 11, as illustrated in the right part of fig. 6. The one or more sensors 4 senses the change of head position or gaze direction and the graphical display objects 10 are changed such that one or more, previously displayed as partly hidden, sides 14 of the sphere are arranged to be displayed as visible.
With the expression "a side of a sphere" is herein meant a predefined physical or digital surface of the sphere, such as a surface area of predefined size and location on the sphere, a predefined part of a total sphere surface or a predefined number of degrees or radians.
A vehicle operator is able to select both the information displayed by the graphical display objects 10 and the magnitude of the head movement needed to cause the change of the graphical display objects 10 according to his preferences.

In some examples, a change of vehicle driver head position upwards, downwards, forwards and/or rearwards is arranged to initiate a change of the graphical display objects 10. In some examples, the predefined change of the vehicle operator head position is a translational movement, a rotational movement or a combination of translation and rotation.
With displayed as partly hidden graphical display objects 10 that are arranged to be displayed as visible, means that a visible part of the graphical display objects 10 has increased in comparison to the partly hidden configuration.
Although the aspects have been described with reference to example embodiments, many different alterations, modifications and the like will become apparent for those skilled in the art.

As used herein, the term "comprising" or "comprises" is open-ended, and includes one or more stated features, elements, steps, components or functions but does not preclude the presence or addition of one or more other features, elements, steps, components, functions or groups thereof.

## Claims

1. A vehicle display arrangement (1) comprising a display (2) for displaying information to a vehicle operator (3), one or more sensors (4) for monitoring a vehicle operator head position, communication means (5) arranged to communicate input signals (6) indicative of the vehicle operator head position to a processing unit (7), arranged to interpret the input signals (6) and, based on the interpretation of the input signals (6), communicate output signals (8) to a control unit (9) via the communication means (5),
**characterized in that**
the control unit (9) being arranged to automatically initiate a dimension change of graphical display objects (10) and a change of the relation between the graphical display objects (10) following a monitored predefined change of the vehicle operator head position in a first direction (11),
wherein the graphical display objects (10) are arranged as sidewalls (13) on a cube,
wherein previously displayed as partly hidden graphical display objects (10) indicative of at least one of a vehicle condition and a vehicle environment condition are arranged to be displayed as visible in a first predefined manner such that a visible part of the graphical display objects (10) previously displayed as partly hidden graphical display objects has increased in comparison to the partly hidden configuration,
wherein the dimension change of graphical objects (10) and the change of the relation between the graphical display objects (10) comprises exaggerated turning of the cube, in comparison with the change of head movements, a vehicle operator will see more of one of the graphical display objects (10) than he would have done if observing a physical cube.

2. A vehicle display arrangement (1) according to claim 1, wherein the control unit (9) is arranged to automatically initiate the dimension change of graphical display objects (10) and the change of the relation between the graphical display objects (10) following a monitored predefined change of the vehicle operator head position in a second direction (12) such that another previously displayed as partly hidden graphical display objects (10) are arranged to be displayed as visible in a second predefined manner.

3. A vehicle display arrangement (1) according to any claims 1 or 2, wherein the control unit (9) is arranged to automatically initiate the dimension change of graphical display objects (10) and the change of the relation between the graphical display objects (10) in a first predefined manner following a monitored predefined change of the vehicle operator head position in a first or second direction (11, 12), thereby being arranged to automatically display conditions in an apparatus or system in a manner that allows perception of the presentation on the display (2) to be three dimensional.

4. A vehicle **characterized in that** the vehicle comprises a vehicle display arrangement (1) according to any one of claims 1-3.

## Patentansprüche

1. Fahrzeuganzeigeanordnung (1), die eine Anzeige (2), um einem Fahrzeugführer (3) Informationen anzuzeigen, einen oder mehrere Sensoren (4), um eine Fahrzeugführerkopfposition zu überwachen, Kommunikationsmittel (5), die zum Kommunizieren von Eingabesignalen (6), die die Fahrzeugführerkopfposition angeben, an eine zum Interpretieren der Eingabesignale (6) und basierend auf der Interpretation der Eingabesignale (6) zum Kommunizieren von Ausgabesignalen (8) an eine Steuereinheit (9) über die Kommunikationsmittel (5) angeordnete Verarbeitungseinheit (7) angeordnet sind, umfasst,
**dadurch gekennzeichnet, dass**
die Steuereinheit (9) zum automatischen Auslösen einer Dimensionsänderung von Grafikanzeige-Objekten (10) und einer Änderung der Beziehung zwischen den Grafikanzeige-Objekten (10) nach einer überwachten vordefinierten Änderung der Fahrzeugführerkopfposition in einer ersten Richtung (11) angeordnet ist,
wobei die Grafikanzeige-Objekte (10) als Seitenwände (13) auf einem Kubus angeordnet sind,
wobei zuvor teilweise ausgeblendet angezeigte Grafikanzeige-Objekte (10), die einen Fahrzeugzustand und/oder einen Fahrzeugumgebungszustand angeben, derart angeordnet werden, dass sie auf eine erste vordefinierte Weise sichtbar derart angezeigt werden, dass ein sichtbarer Teil der Grafikanzeige-Objekte (10) der zuvor teilweise ausgeblendet angezeigten Grafikanzeige-Objekte im Vergleich zur Konfiguration der teilweisen Ausblendung größer wird, wobei die Dimensionsänderung von Grafikobjekten (10) und die Änderung der Beziehung zwischen den Grafikanzeige-Objekten (10) ein im Vergleich zur Änderung von Kopfbewegungen übermäßiges Wenden des Kubus derart, dass ein Fahrzeugführer mehr von einem der Grafikanzeige-Objekte (10) sieht, als er bei einer Betrachtung eines physischen Kubus gesehen hätte, umfasst.

2. Fahrzeuganzeigeanordnung (1) nach Anspruch 1, wobei die Steuereinheit (9) zum automatischen Auslösen der Dimensionsänderung von Grafikanzeige-Objekten (10) und der Änderung der Beziehung zwischen den Grafikanzeige-Objekten (10) nach einer überwachten vordefinierten Änderung der Fahrzeugführerkopfposition in einer zweiten Richtung (12) derart, dass weitere zuvor teilweise ausgeblendet angezeigte Grafikanzeige-Objekte (10) derart angeordnet werden, dass sie auf eine zweite vordefinierte Weise sichtbar angezeigt werden, angeordnet ist.

3. Fahrzeuganzeigeanordnung (1) nach Anspruch 1 oder 2, wobei die Steuereinheit (9) zum automatischen Auslösen der Dimensionsänderung von Grafikanzeige-Objekten (10) und der Änderung der Beziehung zwischen den Grafikanzeige-Objekten (10) auf eine erste vordefinierte Weise nach einer überwachten vordefinierten Änderung der Fahrzeugführerkopfposition in einer ersten oder zweiten Richtung (11, 12) angeordnet ist und dadurch zum automatischen Anzeigen von Zuständen in einer Vorrichtung oder einem System auf eine Weise, die eine dreidimensionale Wahrnehmung der Präsentation auf der Anzeige (2) zulässt, angeordnet ist.

4. Fahrzeug, **dadurch gekennzeichnet, dass** das Fahrzeug eine Fahrzeuganzeigeanordnung (1) nach einem der Ansprüche 1-3 umfasst.

## Revendications

1. Agencement d'affichage pour véhicule (1) comprenant un écran (2) pour afficher une information à un opérateur de véhicule (3), un ou plusieurs capteurs (4) pour surveiller une position de tête d'opérateur de véhicule, un moyen de communication (5) conçu pour communiquer des signaux d'entrée (6) représentatifs de la position de tête d'opérateur de véhicule à une unité de traitement (7), conçue pour interpréter les signaux d'entrée (6) et, sur la base de l'interprétation des signaux d'entrée (6), communiquer des signaux de sortie (8) à une unité de contrôle (9) par l'intermédiaire du moyen de communication (5),
l'agencement d'affichage pour véhicule étant **caractérisé en ce que** :
l'unité de contrôle (9) est conçue pour amorcer automatiquement un changement de dimension d'objets graphiques d'affichage (10) et un changement de la relation entre les objets graphiques d'affichage (10) après un changement prédéfini surveillé de la position de tête d'opérateur de véhicule dans une première direction (11),
les objets graphiques d'affichage (10) étant agencés sous la forme de parois latérales (13) sur un cube,
des objets graphiques d'affichage (10) précédemment affichés comme étant partiellement masqués représentatifs d'une condition de véhicule et/ou d'une condition d'environnement de véhicule étant agencés pour être affichés comme étant visibles dans une première manière prédéfinie, de sorte qu'une partie visible des objets graphiques d'affichage (10) précédemment affichés comme étant partiellement masqués ait augmenté par comparaison avec la configuration partiellement masquée,
le changement de dimension d'objets graphiques (10) et le changement de la relation entre les objets graphiques d'affichage (10) comprenant une rotation exagérée du cube, par comparaison avec le changement de mouvements de tête, de sorte qu'un opérateur de véhicule voie davantage d'objets graphiques d'affichage (10) qu'il n'en verrait s'il observait un cube physique.

2. Agencement d'affichage pour véhicule (1) selon la revendication 1, dans lequel l'unité de contrôle (9) est conçue pour amorcer automatiquement le changement de dimension d'objets graphiques d'affichage (10) et le changement de la relation entre les objets graphiques d'affichage (10) après un changement prédéfini surveillé de la position de tête d'opérateur de véhicule dans une seconde direction (12), de sorte que d'autres objets graphiques d'affichage (10) précédemment affichés comme étant partiellement masqués soient agencés pour être affichés comme étant visibles dans une seconde manière prédéfinie.

3. Agencement d'affichage pour véhicule (1) selon l'une quelconque des revendications 1 et 2, dans lequel l'unité de contrôle (9) est conçue pour amorcer automatiquement le changement de dimension d'objets graphiques d'affichage (10) et le changement de la relation entre les objets graphiques d'affichage (10) dans une première manière prédéfinie après un changement prédéfini surveillé de la position de tête d'opérateur de véhicule dans une première ou une seconde direction (11, 12), de façon à afficher automatiquement les conditions dans un appareil ou un système d'une manière permettant la perception de la présentation sur l'écran (2) comme étant tridimensionnelle.

4. Véhicule **caractérisé en ce qu'**il comprend un agencement d'affichage pour véhicule (1) selon l'une quelconque des revendications 1 à 3.
